# EUROPEAN PATENT SPECIFICATION

(11) **EP 3 510 270 B1**
(45) Date of publication and mention of the grant of the patent: **04.09.2024**
(21) Application number: 17848262.6
(22) Date of filing: 12.09.2017
(51) Int. Cl.: F02D 41/00, B62K 11/02

(54) **MOUNTING OF SENSING ELEMENT FOR A TWO-WHEELED VEHICLE**
MONTAGE EINES SENSORELEMENTS FÜR EIN ZWEIRÄDRIGES FAHRZEUG
MONTAGE D'ÉLÉMENT DE DÉTECTION POUR VÉHICULE À DEUX ROUES

(30) Priority: 12.09.2016 IN 201641031066
(43) Date of publication of application: 17.07.2019
(73) Proprietor: TVS Motor Company Limited, Chennai 600006 (IN)
(72) Inventor: MOTILAL PATIL, Anand, Chennai 600006 (IN); BHASKAR ADIGA, Vijaya, Chennai 600006 (IN); VYTHILINGAM, Karunaharan, Chennai 600006 (IN); MANGARAJU KARANAM, Venkata, Chennai 600006 (IN)
(74) Representative: Patentanwaltskanzlei Matschnig & Forsthuber OG
(86) International application number: PCT/IB2017/055475
(87) International publication number: WO 2018/047136

(56) References cited:
- EP-A1- 1 630 382
- EP-A1- 2 848 510
- EP-A2- 1 239 143
- EP-B1- 1 630 382
- JP-A- 2014 189 106
- US-A1- 2009 013 953
- US-A1- 2010 032 225
- US-A1- 2014 041 614
- US-A1- 2014 324 323

## Description

### FIELD OF THE INVENTION

The present invention relates to an intake system and more particularly to determination of air pressure inside the intake manifold of an internal combustion engine.

### BACKGROUND OF INVENTION

Generally, an internal combustion engine for a two-wheeled vehicle is functionally connected to a rear wheel of a vehicle to provide a forward motion to it. The internal combustion engine comprises of a cylinder bore where the combustion occurs to provide the needed power for the forward motion of the vehicle. The internal combustion (IC) engine, among other components, has a cylinder on top of which a cylinder head is mounted, and receives a reciprocating piston from the bottom. On combustion of the air-fuel mixture, the piston transfers the energy generated during combustion to a crankshaft through a connecting rod thereby driving the crankshaft. In this way, the reciprocatory motion of the piston is converted to rotary motion of the crankshaft. The crankshaft rotation then in turn powers the vehicle.

However, for this whole process to occur an exact and required amount of air-fuel mixture needs to be sent to the internal combustion for combustion. Typically, it is the carburetor which sends the air-fuel mixture as per the requirement. An important factor in the efficiency of internal combustion engines is the amount of air which is mixed with fuel by the carburetor. To achieve optimum efficiency, a predetermined amount of air must be drawn into the carburetor and mixed with a predetermined amount of fuel. If a proper amount of air is drawn into the carburetor, sufficient oxygen will be available to insure complete combustion of the fuel.

One of other such efforts to improve the delivery of air-fuel mixture is to implement a sensor. A sensor which can sense the pressure inside the intake manifold and give a signal to electronic control unit (herein after mentioned as ECU) to control and release a controlled amount of fuel and air mixture to the internal combustion engine. In general, a manifold air pressure (hereinafter mentioned as MAP) sensor is used for such purpose which is generally located in the flow path followed by a mixture of air and fuel. The intake pipe which accommodates flow path for air fuel mixture is already surrounded by various automotive parts such as air cleaner, throttle body body, cooling system parts such as a radiator etc. Due to intake pipe being surrounded by various automotive parts, it becomes difficult to mount a sensor due to space constraint within the intake manifold and hence precise introduction of controlled amount of fuel air mixture inside the internal combustion engine is obstructed. Generally, a MAP sensor is mounted in the intake manifold for sensing air-fuel requirements of the intenal combustion engine. In such a scenario, mounting a MAP sensor on the intake pipe becomes difficult, as the whole space adjoining to it becomes very crowded. Even in the cases wherein the MAP sensor is adjusted to be accommodated on a throttle body or intake pipe, we have to compromise either with the air cleaner capacity or internal combustion engine size or coolant reservoir or radiator location. In addition to it, access of the MAP sensor becomes difficult in such a construction also becomes difficult which hampers its service and maintainability. Furthermore, sufficient layout clearance is required the front side of the vehicle to enable the front wheel to function, and a complex space constraint around the intake manifold may provide a hindrance to it.

Hence, it is desired to find a suitable mounting means for the MAP sensor where there is no space constraint or crowding and it isn't required to compromise either with the internal combustion engine capacity or with the capacity of any other elements of the intake manifold.
Document US2010/0032225A1 discloses a motorcycle with an electric equipment such as an atmospheric pressure sensor to detect the atmospheric pressure, a temperature sensor to detect the temperature of the coolant, a regulator rectifier to rectify voltage, an ignition coil to supply high voltage, a capacitor to smooth output voltage from regulator rectifier, a joint connector to branch a plurality of wirings and a connector to receive externally applied electric power.
Document EP1630382A1 discloses an intake system for a V-type engine for a vehicle. The intake resistance in an intake passage component can be reduced and enhancement of the output of the engine is facilitated. An intake pressure sensor is supported by the main frame on the right side next to the throttle body on the side of the first bank.
US2009/0013953A1 discloses an intake system in a motorcycle for allowing air to be taken into an engine. EP2848510A1 discloses a steering damper control apparatus to generate a damping force which acts on a steering.

### SUMMARY OF THE INVENTION

The invention is directed at a two-wheeled vehicle as described in claim 1. The dependent claims describe optional features of the invention.

### BRIEF DESCRIPTION OF DRAWINGS

The detailed description of the present subject matter is described with reference to the accompanying figures. Same numbers are used throughout the drawings to reference like features and components.
Figure **1** illustrates a side view of an exemplary two-wheeled vehicle, in accordance with an embodiment of the present subject matter.
Figure **2** illustrates a side view of a known intake manifold for an internal combustion engine of a two-wheeled vehicle.
Figure **3** illustrates a side view of a vehicle frame structure and the exemplary two-wheeled vehicle as illustrated in Fig. 1, in accordance with an embodiment of the present subject matter.
Figure **4** illustrates a side view of the intake manifold and internal combustion engine of the exemplary two-wheeled vehicle as illustrated in Fig. 1, in accordance with an embodiment of the present subject matter.
Figure **5** illustrates a cross sectional view of the intake manifold for an internal combustion engine in accordance with an embodiment of the present subject matter.
Figure **6** illustrates a side view of the vehicle frame structure of the exemplary two-wheeled vehicle as illustrated in Fig. 1, in accordance with an embodiment of the present subject matter.
Figure **7** illustrates a perspective side view of the vehicle frame structure of the exemplary two-wheeled vehicle as illustrated in Fig. 1, in accordance with an embodiment of the present subject matter.

### DETAILED DESCRIPTION

Generally, an internal combustion engine for a two-wheeled vehicle is functionally connected to a rear wheel of a vehicle to provide a forward motion to it. The internal combustion engine comprises of a cylinder bore where the combustion occurs to provide the needed power for the forward motion of the vehicle. The internal combustion (IC) engine, among other components, has a cylinder on top of which a cylinder head is mounted, and receives a reciprocating piston from the bottom. On combustion of the air-fuel mixture, the piston transfers the energy generated during combustion to a crankshaft through a connecting rod thereby driving the crankshaft. In this way, the reciprocatory motion of the piston is converted to rotary motion of the crankshaft. The crankshaft rotation then in turn powers the vehicle.

Typically, a carburetor sends the air-fuel mixture as per the requirement of the internal combustion engine. An important factor in the efficiency of internal combustion engines is the amount of air mixed with fuel in the carburetor. To achieve optimum efficiency, a predetermined amount of air must be drawn into the carburetor and mixed with a predetermined amount of fuel. If a proper amount of air is drawn into the carburetor, sufficient oxygen will be available to insure complete combustion of the fuel.

Moreover, the air-fuel ratio of the mixtures supplied into the internal combustion engine has a great effect on the quality of ignition and combustion of the mixtures. It also affects the exhaust gas composition, and various efforts have heretofore been made toward accurate controlling of the air-fuel ratio of the mixtures fed to an engine. These efforts range from the improved accuracy of finishing for the carburetor component parts and increased carburetor adjustments to efforts toward more accurate methods of measuring the amount of air drawn into an engine and correspondingly accurate fuel metering methods in the case of fuel injection type fuel feed systems.

One of other such efforts to improve the delivery of air-fuel mixture is to implement a sensor. A sensing element which can sense the pressure inside the intake manifold and give a signal to ECU to control and release a controlled amount of air-fuel mixture to the cylinder engine. In general, a MAP sensor is used for such purposes, being located in the flow path followed by a mixture of air and fuel. The manifold air pressure sensor (MAP sensor) is one of the sensors used in an internal combustion engine's electronic control system. The manifold air pressure sensor provides instantaneous manifold pressure information to the engine's electronic control unit (ECU). The data is used to calculate air density and determine the engine's air mass flow rate, which in turn determines the required fuel metering for optimum combustion and influence the advance or retard of ignition timing.

Generally, the intake pipe which accommodates flow path for air fuel mixture is already surrounded by various automotive parts such as air cleaner, throttle body, cooling system parts such as a radiator etc. Due to intake pipe being surrounded by various automotive parts, it becomes difficult to mount a sensing element due to space constraint within the intake manifold and hence precise introduction of controlled amount of fuel air mixture inside the cylinder engine is obstructed. Generally, a MAP sensor is used for such purposes of determining the requirements of the vehicle and internal combustion engine. In such a scenario, mounting a MAP sensor on the intake pipe becomes difficult, as the whole space adjoining to it becomes very crowded. Even in the cases wherein the MAP sensor is adjusted to be accommodated on a throttle body or intake pipe, we have to compromise either with the air cleaner capacity or engine size or coolant reservoir or radiator location. Hereinafter, for description purposes of the sensing element is referred as MAP sensor throughout the application.

Hence, an objective of the present subject matter is to provide a mounting means for the MAP sensor which is feasible and not difficult to mount or amounts to crowding of the intake manifold. According to one aspect of the present subject matter, the MAP sensor is to be mounted in such a fashion and at such a location which does not results in compromising with the capacity and size of the internal combustion engine, or the capacity and size of any other part associated with the internal combustion engine such as air cleaner or coolant reservoir or radiator.

According to additional aspect, the MAP sensor is to be mounted at such a location where its performance does not get affected.

In an embodiment, a MAP sensor attached at a remote location for a two-wheeled vehicle is provided. The present invention describes a mounting to obviate the limitations of the prior art by providing a system with mounting means for intake pressure sensor in which a pressure tapping on the intake manifold is formed and the intake pressure sensor is remotely mounted. This remote mounting of intake pressure sensor allows degree of freedom for placing the sensor away from the intake manifold thereby overcoming the need of intake pressure sensor mounting on the intake manifold. The present invention further provides freedom to provide desired orientation for proper functioning and best efficiency of the intake pressure sensor. According to the present invention, a MAP (manifold air pressure) sensor unit is mounted outside the intake system on a vehicle frame assembly. The MAP sensor senses the optimal pressure & sends the output to an ECU (electronic control unit) which is capable of processing the input received from the sensor and provides output to control the flow of air-fuel mixture inside the engine cylinder through an intake port of said internal combustion engine. Input to the MAP sensor is taken through a tapping on the main intake flow path through a flexible hose connection. The MAP sensor is further mounted on a housing which is assembled on frame member on the said location.

In an embodiment, the vehicle body frame assembly extends along a vehicle longitudinal axis. The vehicle body frame assembly for the vehicle comprises a front sub frame and a rear sub frame. Referring to one embodiment of the present invention, the rear sub frame is connected to the front sub frame by a fastener member including bolts and screws. The above described front sub frame comprises of a mainframe assembly extending in a rearward direction from the head tube along the left hand side and right hand side of the vehicle. The left side mainframe assembly and right side mainframe assembly comprises of a couple of right side first main tube, right side second main tube and a left side first main tube, left side second main tube being disposed above each other in a same longitudinal direction. As per one embodiment of the present invention, the rear sub frame comprises of one rear frame including a pair of left and right rear frames placed in the vehicle width direction. Referring to one embodiment of the present invention, the rear frame is connected to the front sub frame by fastener members, respectively. Each of the rear frames includes plurality of pipe members and joint members which are coupled to each other, typically by welding, whereas the pair of main frames is firmly joined to each other via the head tube.

In an embodiment, the MAP sensor is mounted on the vehicle frame assembly at a remote location, not in line with the intake manifold. A MAP sensor housing is provided comprising of a sensing tip which helps in sensing of the required air pressure. The MAP sensor is dispose over the MAP sensor housing and the embodiment is mounted upon the vehicle frame assembly through a mounting bracket. In an embodiment, the mounting bracket is detachably attached to the mainframe assembly on either on the right side first main tube and right side second main tube depending upon the vehicle specification. (Hereinafter, for convenience purposes the mounting MAP sensor is said to be mounted on the right side first main tube) In an embodiment, the MAP sensor is mounted on said right side first main tube disposed beside the head such that it lies ahead of the internal combustion engine and is above the intake manifold.

In an embodiment, the MAP sensor can also be mounted on the right side second main tube such that it lies beside the intake manifold, ahead of the internal combustion engine. The aim for such a location is to eliminate the need of mounting the MAP sensor in the intake manifold because of the space constraint that it posses. The MAP sensor is also not mounted in the intake manifold to protect it from the head being radiated in that region. In furtherance to it, the MAP sensor is mounted on the mainframe assembly to protect it from the problems of vibration and provide a rigid and stable mounting to the MAP sensor. A MAP sensor hose is connected to the MAP sensor housing through which the pressure difference is sent to it for the sensor tip to process. Based on the readings, the MAP sensor sends the output to the ECU for controlling the amount of air which is being sent it. In an embodiment, the hose extending from the MAP sensor housing is connected to the inlet hose at a junction where the fuel hose and the air hose meet combining at the inlet hose. The MAP sensor hose being connected to the inlet hose at the junction sense the pressure present and the difference and according the sensor acts to send its reading to the ECU. In an embodiment, the length of the MAP sensor hose connecting the MAP sensor to the intake hose has to be restricted and cannot be very long, because in such a case it is difficult to send the pressure difference. Thus, the MAP sensor is to be disclosed in a region close to the intake manifold.

Thus, the present subject matter provides a MAP sensor disposed over a MAP sensor housing mounted onto the vehicle frame through a mounting bracket. The mounting bracket is mounted on the mainframe assembly. The MAP sensor described above is mounted outside the intake system, at a remote location not being in line with the air cleaner, intake pipe or radiator etc. However, it is mounted on the mainframe assembly close the intake manifold, lying beside the head tube and ahead of the internal combustion engine. In furtherance to it, the above subject matter eliminates the crowding of the intake manifold, such that size for none of the elements needs to be reduced for mounting of the MAP sensor. Furthermore, the present subject matter also provides an easy accessibility for the MAP sensor for servicing and other such purposes, and protects it from the head being radiated from the intake manifold. In furtherance to it, the present subject matter provides a rigid and stable mounting to the MAP sensor by mounting it on the mainframe assembly.

The aforesaid and other advantages of the present subject matter would be described in greater detail in conjunction with the figures in the following description.

Arrows provided in the top right corner of each figure depicts direction with respect to the vehicle, wherein an arrow F denotes front direction, an arrow R indicated R direction, an arrow Up denotes upward direction, an arrow Dw denoted downward direction, an arrow Rh denotes right side, an arrow Lh denoted left side, as and where applicable.

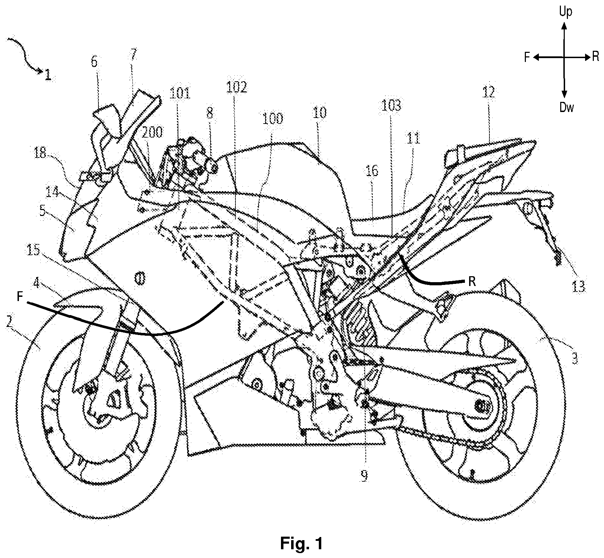

Fig. 1 illustrates a right side view of an exemplary motorcycle type two-wheeled vehicle (1), in accordance with one embodiment of the present invention. As per one embodiment of the present invention, the vehicle frame assembly (100) extends along a vehicle longitudinal axis (AA). In one embodiment, said vehicle body frame assembly (100) for the vehicle (1) comprises a front sub frame (FD) and a rear sub frame (R 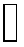 ). Referring to one embodiment of the present invention, the rear sub frame (R 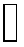 ) is connected to the front sub frame (FD) by a fastener member including bolts and screws. In one embodiment, said front sub frame (F 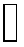 ) includes a mainframe assembly (102) extending rearward from a head tube (101). As per one embodiment of the present invention, said mainframe assembly (102) includes at least a pair of left and right main frames (102L), (102R) placed in the vehicle width direction. As per one embodiment of the present invention, said rear sub frame (R 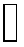 ) comprises at least one rear frame (103) including a pair of left and right rear frames (103L), (103R) placed in the vehicle width direction. Referring to one embodiment of the present invention, said at least one rear frame (103) is connected to said mainframe assembly (102) by fastener members, respectively, to form a trellis frame structure. As per one embodiment of the present invention, a fuel tank (10) is placed over said pair of left and right main frames (102L), (102R) and is located rearward relative to the handlebar assembly (8). As per one embodiment of the present invention, a seat assembly (11) is placed over at least a portion of the said pair of right and left rear frames (103L), (103R) and rearward relative to the fuel tank (10). The seat assembly (11) comprises of a driver seat (16) and a pillion seat (12) disposed rearwardly of the driver 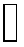 s seat (16). Further, referring to one embodiment, each of said pair of rear frames (103) includes the plurality of pipe members and the plurality of joint members which are coupled to each other, typically by welding. The pair of left and right mainframe (102L), (102R) is firmly joined to each other via the head tube (101).

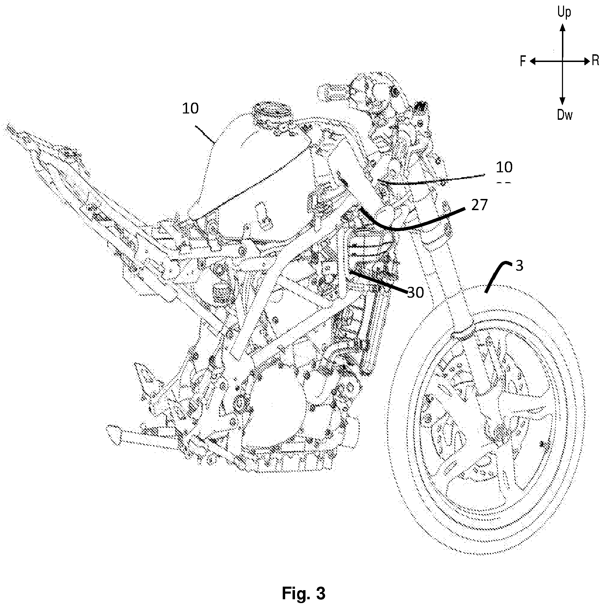

Further in Fig.1, as per one embodiment, in a front portion (F) of the vehicle (1), a steering shaft (not shown) is supported rotatably in a certain range. The handlebar assembly (8) includes a pair of right and left handlebars (not shown) protruding to the left and the right, respectively. Further, the handlebar assembly (8) is rotatably integrally connected to the steering shaft for steering the vehicle (1) and is connected to a front wheel (2) through the steering shaft. A steering handle (not shown) is rotatably supported, independently of a front fork assembly (15), on a steering stem provided on the head tube (101) of the vehicle body frame assembly (100). An upper portion of the front wheel (2) is covered by a front fender (4) which prevents mud and water from getting deflected towards the steering shaft. The front wheel (2) is rotatably mounted on the front portion (F) thereof. The front fork assembly (15) forms a front suspension system and serves as a rigidity component. Further, the front fork assembly (15) is mounted over the front fender (4). In a portion lying ahead of the front fork assembly (15), a lighting device such as a headlamp (5) is disposed in a headlamp housing (14), a pair of signaling devices such as turn signal lamps (not shown), a display device such as a speedometer (not shown) are housed by a holding structure (not shown) mounted thereto. Furthermore, the vehicle comprises of a windscreen (7) mounted to the front of the vehicle (1). A front cowl (18) is mounted to the front of the vehicle (1). A pair of rear view mirror (6) comprises a casing, the casing having a front mirror for reflecting the image of traffic approaching from behind. A two legged stand (not shown) is used to support and hold the vehicle (1). The stand (not shown) moves on a pivot (not shown) to take up two positions, one folded up and the other on the ground. Further, in a rear body portion (R) of the vehicle (1), a rear wheel (3) is rotatably mounted on the rear body portion (R) thereof. A rear suspension system, which is a hydraulic damped arrangement, is connected to the body frame assembly (100) at the rear body portion (R) of the vehicle (1). The rear suspension system for the vehicle (1) typically comprises a damper or shock absorber and a spring unit (9) usually employed to connect each right and left side of, or the whole swing arm unit (not shown) to the vehicle body frame assembly (100). An internal combustion engine (as shown in Fig. 3) is mounted to a front lower portion of the vehicle body frame assembly (100) by means of an engine mounting bracket (not shown).

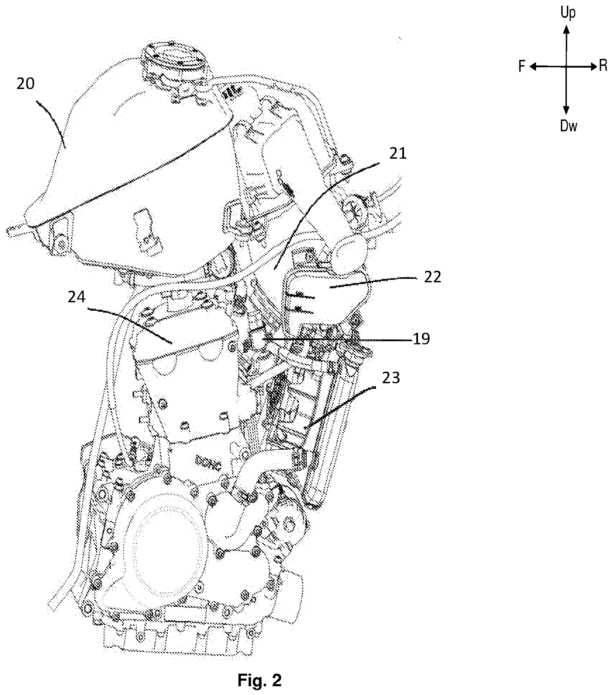

Fig. **2** illustrates a side view of a known intake manifold for an internal combustion engine, generally used for mounting of MAP sensor. In accordance to the known art, throttle body is generally part of a carburetor which is most commonly fitted to petrol driven internal combustion engine. The carburetor comprises a die cast body of complex shape into which a series of carefully machined openings are provided. The carburetor provides a combustible charge to the combustion chambers of the internal combustion engine for ignition and works under the basic principle of atmospheric pressure. A typical carburetor, made of aluminum or an aluminum alloy, is connected to the intake conduit on one side and an air inlet device on the opposite side through known joining mechanisms. Most motorcycle carburetor circuits are governed by throttle body position and not by engine speed. An intake pipe is located between the carburetor and an intake manifold close to the cylinder head and is generally made of aluminum. The intake manifold receives air-fuel mixture from the carburetor and supplies it to the combustion chamber of an internal combustion engine with the help of intake valves, the intake valves also situated in the cylinder head.

As illustrated in Figure **2****,** the region in vicinity of the throttle body (19) is densely occupied by various automotive parts such as fuel tank (20) air cleaner (21), internal combustion engine (24), coolant reservoir (22), radiator and cooling fan (23). In such a scenario, mounting a MAP sensor on the intake pipe or in vicinity of the throttle body (19) is geometrically difficult. Even in the cases wherein the MAP sensor is adjusted to be accommodated on the throttle body (19) or intake pipe, we have to compromise either with the air cleaner (21) capacity or internal combustion engine (24) size or coolant reservoir (22) or radiator location.

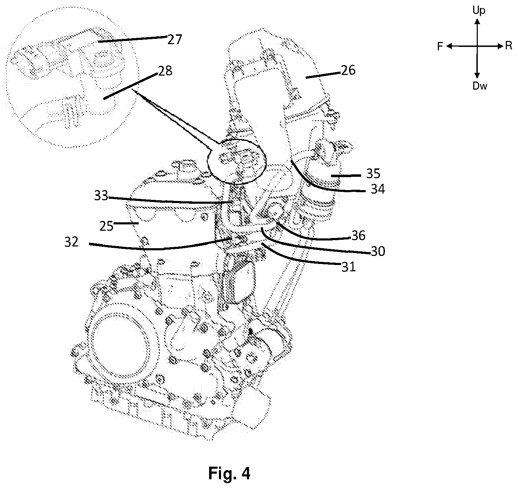

Fig. 3 illustrates a side view of the vehicle and the frame assembly of the exemplary two-wheeled vehicle (1) as shown in Fig. 1, in accordance with an embodiment of the present subject matter. In an embodiment, the fuel tank (10) is disposed over said left side mainframe (102L) and right side mainframe (102R) in a space between them. The internal combustion engine (25) located below the fuel tank (10) is mounted on a front lower portion of the mainframe assembly (102) through a bracket. In an embodiment, the air cleaner system (26) is disposed beside the fuel tank (10) to provide the required amount of air for combustion. To obviate the above described problems in the prior art, the MAP sensor (27) is mounted remotely and not line in with the intake manifold (shown in Fig. 4). In an embodiment, the MAP sensor (27) is disposed over the MAP sensor housing (28), wherein said MAP sensor housing (28) is mounted to mainframe assembly (102) through a mounting bracket (29). In an embodiment, the mounting bracket (29) is detachably attached to the right side first main tube (102R), for securing of the MAP sensor (27) and MAP sensor housing (28). Another important element for the present invention is the MAP sensor hose (30) which connects the MAP sensor (27) to the intake hose (31) for reading the pressure difference.

Fig. **4** illustrates a side view of an intake manifold (32) for the internal combustion engine (25) of the exemplary two-wheeled vehicle (1) as shown in Fig. 1, in accordance with an embodiment of the present subject matter. In an embodiment, the internal combustion (25) engine comprises of an intake manifold (32), wherein an intake hose (31) is present acting as a passage for the air-fuel mixture to enter the internal combustion engine (25). In an embodiment, the region also comprises of a throttle body (33), purge control valve hose (34), and canister (35) which makes the whole intake manifold (32) a compact and crowded region. Thus, the whole intake manifold region (32) is not a suitable place for mounting of the MAP sensor (27) also because of the space constraint and the heat which it radiates. In an embodiment, the MAP sensor (27) is not disposed in line with the intake manifold (32), rather is located beside the head tube (101) above the intake manifold (32), lying ahead of the internal combustion engine (25) and disposed on the mainframe assembly (102). It is mounted on the mainframe assembly (102) also to provide the MAP sensor with a stable and rigid mounting. The aim of providing the MAP sensor it to be as close as possible to the intake manifold (32) keeping the length of the MAP sensor hose (30) as short as possible. In an embodiment, the MAP sensor hose (30) is connected to the intake hose (31) at a connector joint (36). The connector joint (36) acts as a point wherein the hose carrying the air-fuel mixture and the purge control valve hose (34) come and meet to form the intake hose (31). The MAP sensor hose (28) is also connected to the connector joint (36), such that the pressure difference present is sent through it to MAP sensor housing (28) for the MAP sensor (27) to send the output reading. In an embodiment, the MAP sensor (27) is supposed to be as close as possible to the intake manifold (32). Therefore, the length of the MAP sensor hose (30) cannot be long and for the purposes of this invention the length of the MAP sensor hose is supposed to lie in a pre-determined range of 200-250 mm. Thus, as per the present subject matter the MAP sensor (27) is not mounted or located in the intake manifold (32), eliminating the need to reduce the size of internal combustion engine (25), air cleaner system (26) or any other element of the intake manifold (32), and providing a rigid and stable mounting to the MAP sensor (27).

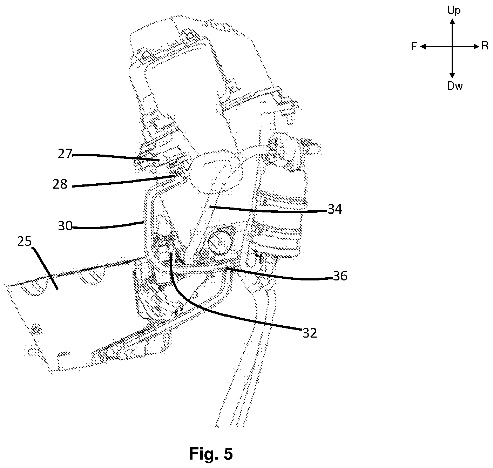

Fig. 5 illustrates a cross sectional view of the intake manifold (32) for the internal combustion engine (25) of the exemplary two-wheeled vehicle (1) as shown in Fig. 1, in accordance with an embodiment of the present subject matter. In an embodiment, the purge control valve hose (34) helps is transmitting the fuel vapors from the canister (35) to the internal combustion engine (25) through the intake hose (31). A separate flexible hose carries the air-fuel mixture for the internal combustion engine, wherein the purge control valve hose (34) and the hose carrying air-fuel mixture meet at the common joint (36), to combine and form the intake hose (31) to carry the overall mixture to the internal combustion engine (25). The intake hose (31) extends from a connection joint (36), where the hose transferring air-fuel mixture and the purge control valve hose (34) transferring fuel vapors from the canister (35) meet. In an embodiment, the MAP sensor hose (30) also meets at the connection joint (36) to take the pressure difference value from the connector joint (36) to the MAP housing (28) and MAP sensor (27) for calculation and sending an appropriate output to the ECU. Thus, the present subject matter enables an efficient output even when the MAP sensor (27) is located at a remote location above or beside the intake manifold (32) and not in line with it.

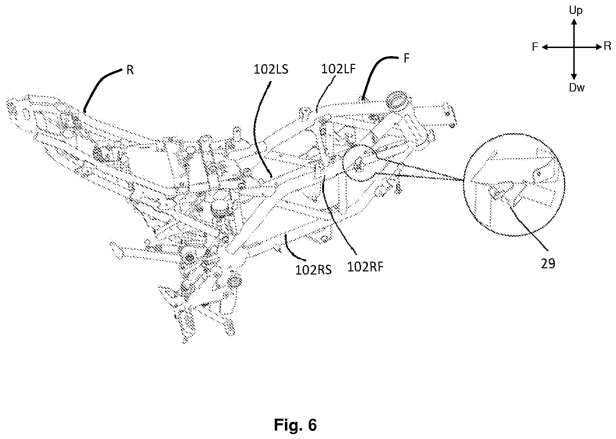

Fig. **6** illustrates a side view of the frame assembly (100) of the exemplary two-wheeled vehicle (1) as shown in Fig. 1, in accordance with an embodiment of the present subject matter. In an embodiment, the vehicle body frame assembly comprising of front sub frame (F) and rear sub frame (R) extends along a vehicle longitudinal axis. Referring to one embodiment of the present invention, the rear sub frame (R) is connected to the front sub frame (F) by fastener members including bolts and screws. The above described front sub frame (F) comprises of mainframe assembly (102) extending in a rearward direction from the head tube (101) placed along the vehicle width. The left side mainframe (102L) and right side mainframe (102R) comprise of a couple of right side first main tube (102RF), right side second main tube (102RS) and a left side first main tube (102LF), left side second main tube (102LS) being disposed above each other in a same longitudinal direction. As per one embodiment of the present invention, the rear sub frame (R) comprises of one rear frame (103) including a pair of left and right rear frames placed in the vehicle width direction. In an embodiment, the rear frame (103) is connected to the mainframe by fastener members, respectively, to form a trellis frame structure. Each of the rear frames (103) includes plurality of pipe members and joint members which are coupled to each other, typically by welding, whereas the mainframe assembly (102) is firmly joined to each other via the head tube (101). In an embodiment, the mounting bracket (29) is attached to the right side first main tube (102RF) on which the MAP sensor (27) is mounted through the MAP housing (28). The mounting bracket (29) allows mounting of the MAP sensor (27) on a remote location, either above or beside the intake manifold (32) and not in line with it. The remote mounting of the MAP sensor (27) with respect to the intake manifold (32) provides sufficient scope and space for assembly, removal, maintenance and replacement of the MAP sensor (27), without affecting its efficiency. In an embodiment, mounting of the MAP sensor (27) on the right side first main tube (102RF) is not limited, and thus can be mounted on either of the right side second main tube (102RS) and right side first main tube (102RF). The MAP sensor (27) is mounted on the mainframe assembly (102) with a purpose to provide it with a stable and rigid mounting free from vibrations. Thus, the present subject matter provides a flexibility of mounting of the MAP sensor (27) to any of the side tubes of the mainframe assembly (102) in a region beside the head tube (102) such that it lies ahead of the internal combustion engine (25).

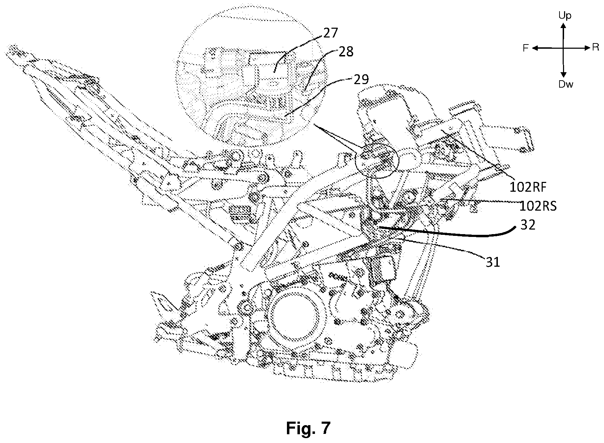

Fig. **7** illustrates a side view of the vehicle frame assembly (100) of the exemplary two-wheeled vehicle (1) shown in Fig. 1, in accordance with an embodiment of the present subject matter. In an embodiment, the mounting bracket (29) is attached to the right first main tube (102RF), wherein the MAP sensor (27) is mounted on the mounting bracket (29) through the MAP sensor housing (28). The MAP sensor (27) is disposed over MAP sensor housing (28), wherein the MAP sensor housing (28) is mounted to the mounting bracket (29) attached to the right side first main tube (102RF). In an embodiment, the MAP sensor (27) is disposed over the MAP sensor housing (28) to eliminate the problems related to vibration and provide stability, wherein the MAP sensor housing (28) comprises of the sensing tip to measure the pressure difference for the intake hose. Thus, the present subject matter provides sufficient scope and space for assembly, removal, maintenance and replacement of the MAP sensor (27). In furtherance to it the present subject matter provides a stable mounting to the MAP sensor by disposing it on the mainframe assembly (102). The mounting of the MAP sensor on the mainframe assembly (102) beside the head tube (101) provides a scope for the MAP sensor (27) to be close to the intake manifold (32) by lying ahead of the internal combustion engine (25) without allowing the heat to affect the MAP sensor (27). One of the other advantages of the remote mounting of MAP sensor (27) is that the same layout of the intake system can be used for vehicles using both the carburetor and electronic fuel injection system.

Thus, the present subject matter provides a stable and rigid mounting for the MAP sensor (27) on the mainframe assembly (102), which is not in line with the intake manifold (32) of the vehicle (1). The mainframe assembly (102) comprises of a mounting bracket (29) attached to it, on which the MAP sensor (27) is mounted through the MAP sensor housing (28). According to the present subject matter, mounting of the MAP sensor (27) is on the mainframe assembly (102) beside the head tube (101) allows the MAP sensor (27) to lie ahead of the internal combustion engine (25) and to be close to the intake manifold (32), eliminating its crowding and not let the heat being radiated form it to affect the MAP sensor (27). In furtherance to it, the present subject matter provides sufficient scope and space for assembly, removal, maintenance and replacement of the MAP sensor (27).

It is to be understood that the aspects of the embodiments are not necessarily limited to the features described herein. Many modifications and variations of the present subject matter are possible in the light of above disclosure. Therefore, within the scope of claims of the present subject matter, the present disclosure may be practiced other than as specifically described.

## Claims

1. A two-wheeled vehicle (1) comprising:
a vehicle frame assembly (100) comprising a mainframe assembly (102) extending in a downward rearward direction from a head tube (101) disposed in a front portion of said two-wheeled vehicle (1);
an internal combustion engine (25) being mounted to a lower portion of said mainframe assembly (102) to provide power to said two-wheeled vehicle (1) on combustion of a substantial air-fuel mixture received, said internal combustion engine (25) having an intake manifold (32) including an intake hose (31); and
a sensing element (27) provided to sense requirements of said two-wheeled vehicle (1), wherein said sensing element (27) is mounted on said mainframe assembly (102) being disposed beside said head tube (101), ahead of said internal combustion engine (25) when viewed from side of said two-wheeled vehicle (1),
**characterized in that** said sensing element (27) is connected to a MAP sensor hose (30),
a purge control valve hose (34) and a hose carrying air-fuel mixture being configured to combine and meet at a connector joint (36), thereby forming said intake hose (31), said intake hose (31) being adapted to carry said air-fuel mixture to said internal combustion engine (25),
wherein said connector joint (36) is configured to connect said MAP sensor hose (30) to said intake hose (31) of said intake manifold (32) for carrying pressure of said intake hose (31) to said sensing element (27),
wherein said sensing element (27) is disposed above said intake manifold (32), and wherein length of said MAP sensor hose (30) being in a pre-determined range of 200-250mm.

2. The two-wheeled vehicle (1) as claimed in claim 1, wherein said mainframe assembly (102) enabled for mounting of said sensing element (27) comprises a left side mainframe (102L) and a right side mainframe (102R) placed at said two-wheeled vehicle (1) width direction and extending in a downward rearward direction from said head tube (101).

3. The two wheeled vehicle (1) as claimed in claim 2, wherein said left side mainframe (102L) and said right side mainframe (102R) comprise a pair of tubes left side first main tube (102LF), left side second main tube (102LS) and a right side first main tube (102RF), right side second main tube (102RS), wherein said pair of main tubes are placed above each other along a longitudinal axis.

4. The two-wheeled vehicle (1) as claimed in claim 1, wherein said internal combustion engine (25) receives said air-fuel mixture through said intake hose (31) via a canister (35), wherein fuel for said air-fuel mixture is provided through a fuel tank (10), said fuel tank (10) being disposed over said mainframe assembly (102), and wherein said internal combustion engine (25) comprises said intake manifold (32) disposed below said fuel tank (10).

5. The two-wheeled vehicle (1) as claimed in claim 1, wherein said sensing element (27) provided is a MAP sensor (27), wherein said MAP sensor (27) is disposed over a MAP housing (28) for eliminating noise and vibration, and wherein said MAP housing (28) accommodates a sensing tip enabling said MAP sensor to determine pressure difference in said intake hose (31).

6. The two-wheeled vehicle (1) as claimed in claim 1, wherein said MAP sensor (27) is connected to said intake manifold (32) through said MAP sensor hose (30), said MAP sensor hose (30) extending from said MAP sensor housing (28).

7. The two-wheeled vehicle (1) as claimed in claim 1, wherein said MAP sensor (27) is mounted on said mainframe assembly (102) through mounting of said MAP housing (28) on a mounting bracket (29), said mounting bracket (29) being detachably attached to said mainframe assembly (102).

8. The two-wheeled vehicle (1) as claimed in claim 1, wherein said MAP sensor (27) is mounted on said mainframe assembly (102) over said right side first main tube (102RF) and above said intake manifold (32), said MAP sensor (27) being disposed beside said head tube (101) ahead of said internal combustion engine (25).

9. The two-wheeled vehicle (1) as claimed in claim 1, wherein said MAP sensor (27) is mounted on said mainframe assembly (102) and over said right side second main tube (102RS), wherein said MAP sensor (27) is disposed beside said intake manifold (32) and ahead of said internal combustion engine (25).

## Patentansprüche

1. Ein zweirädriges Fahrzeug (1), umfassend:
eine Fahrzeugrahmenanordnung (100) mit einer Hauptrahmenanordnung (102), die von einem Kopfrohr (101), das sich in einem vorderen Bereich des zweirädrigen Fahrzeugs (1) befindet, nach hinten unten verläuft;
einen Verbrennungsmotor (25), der an einem unteren Bereich der Hauptrahmenanordnung (102) angebracht ist, zur Energieversorgung des zweirädrigen Fahrzeugs (1) bei Verbrennung eines aufgenommenen im Wesentlichen Luft-Kraftstoff-Gemisches, wobei der Verbrennungsmotor (25) einen Ansaugkrümmer (32) mit einem Ansaugschlauch (31) aufweist; und
ein Sensorelement (27) zum Erkennen von Anforderungen des zweirädrigen Fahrzeugs (1), wobei das Sensorelement (27) auf der Hauptrahmenanordnung (102) angebracht ist und neben dem Kopfrohr (101), von der Seite des zweirädrigen Fahrzeugs (1) aus gesehen vor dem Verbrennungsmotor (25), angeordnet ist,
**dadurch gekennzeichnet, dass** das Sensorelement (27) mit einem MAP-Sensorschlauch (30) verbunden ist,
wobei ein Spülsteuerventilschlauch (34) und ein Schlauch, der ein Luft-Kraftstoff-Gemisch führt, dazu ausgebildet sind, sich zu vereinigen und an einer Verbindungsstelle (36) zusammenzukommen und dadurch den Ansaugschlauch (31) zu bilden, wobei der Ansaugschlauch (31) dazu eingerichtet ist, das Luft-Kraftstoff-Gemisch zu der Brennkraftmaschine (25) zu führen,
wobei die Verbindungsstelle (36) so ausgebildet ist, dass sie den MAP-Sensorschlauch (30) mit dem Ansaugschlauch (31) des Ansaugkrümmers (32) verbindet, um den Druck des Ansaugschlauchs (31) zu dem Sensorelement (27) zu leiten,
wobei das Sensorelement (27) oberhalb des Ansaugkrümmers (32) liegt und wobei die Länge des MAP-Sensorschlauchs (30) in einem vorbestimmten Bereich von 200-250 mm liegt.

2. Zweiradfahrzeug (1) nach Anspruch 1, wobei die Hauptrahmenanordnung (102), die zur Anbringung des Sensorelements (27) fähig ist, einen linken Hauptrahmen (102L) und einen rechten Hauptrahmen (102R) umfasst, die in der Breitenrichtung des Zweiradfahrzeugs (1) angeordnet sind und sich von dem Kopfrohr (101) nach hinten unten erstrecken.

3. Zweiradfahrzeug (1) nach Anspruch 2, wobei der linke Hauptrahmen (102L) und der rechte Hauptrahmen (102R) ein Paar von Rohren umfassen, ein linkes erstes Hauptrohr (102LF), ein linkes zweites Hauptrohr (102LS) und ein rechtes erstes Hauptrohr (102RF), ein rechtes zweites Hauptrohr (102RS), wobei das Paar von Hauptrohren entlang einer Längsachse übereinander angeordnet sind.

4. Zweiradfahrzeug (1) nach Anspruch 1, wobei der Verbrennungsmotor (25) das Luft-Kraftstoff-Gemisch durch den Ansaugschlauch (31) über einen Kanister (35) erhält, wobei Kraftstoff für das Luft-Kraftstoff-Gemisch durch einen Kraftstofftank (10) geliefert wird, welcher Kraftstofftank (10) sich über der Hauptrahmenanordnung (102) befindet, und wobei der Verbrennungsmotor (25) den Ansaugkrümmer (32) unterhalb des Kraftstofftanks (10) aufweist.

5. Zweiradfahrzeug (1) nach Anspruch 1, wobei das vorgesehene Sensorelement (27) ein MAP-Sensor (27) ist, welcher MAP-Sensor (27) sich über einem MAP-Gehäuse (28) befindet, zum Eliminieren von Geräuschen und Vibrationen, und wobei im MAP-Gehäuse (28) eine Sensorspitze aufgenommen ist, die dem MAP-Sensor ermöglicht, eine Druckdifferenz in dem Ansaugschlauch (31) zu bestimmen.

6. Zweiradfahrzeug (1) nach Anspruch 1, wobei der MAP-Sensor (27) mit dem Ansaugkrümmer (32) durch den MAP-Sensorschlauch (30) verbunden ist, der sich von dem MAP-Sensorgehäuse (28) erstreckt.

7. Zweiradfahrzeug (1) nach Anspruch 1, wobei der MAP-Sensor (27) auf der Hauptrahmenanordnung (102) durch Anbringen des MAP-Gehäuses (28) auf einem Montageträger (29) angebracht ist, welcher Montageträger (29) abnehmbar an der Hauptrahmenanordnung (102) befestigt ist.

8. Zweiradfahrzeug (1) nach Anspruch 1, wobei der MAP-Sensor (27) auf der Hauptrahmenanordnung (102) über dem rechten ersten Hauptrohr (102RF) und oberhalb des Ansaugkrümmers (32) angebracht ist, wobei sich der MAP-Sensor (27) neben dem Kopfrohr (101) vor dem Verbrennungsmotor (25) befindet.

9. Zweiradfahrzeug (1) nach Anspruch 1, wobei der MAP-Sensor (27) auf der Hauptrahmenanordnung (102) und über dem rechten zweiten Hauptrohr (102RS) angebracht ist, wobei sich der MAP-Sensor (27) neben dem Ansaugkrümmer (32) vor dem Verbrennungsmotor (25) befindet.

## Revendications

1. Véhicule à deux roues (1) comprenant :
un ensemble de cadre de véhicule (100) comprenant un ensemble de cadre principal (102) s'étendant dans une direction vers l'arrière bas à partir d'un tube de direction (101) disposé dans une partie avant dudit véhicule à deux roues (1) ;
un moteur à combustion interne (25) monté sur une partie inférieure de l'ensemble de cadre principal (102) pour fournir de l'énergie au véhicule à deux roues (1) lors de la combustion d'un mélange air-carburant substantiel reçu, ledit moteur à combustion interne (25) ayant un collecteur d'admission (32) comprenant un tuyau d'admission (31) ; et
un élément de détection (27) destiné à détecter les besoins dudit véhicule à deux roues (1), ledit élément de détection (27) étant monté sur ledit ensemble de cadre principal (102) disposé à côté dudit tube de direction (101), en avant dudit moteur à combustion interne (25) vu du côté dudit véhicule à deux roues (1),
**caractérisé en ce que** ledit élément de détection (27) est connecté à un tuyau de capteur MAP (30),
un tuyau de soupape de commande de purge (34) et un tuyau transportant le mélange air-carburant étant configurés pour se combiner et se rencontrer au niveau d'un joint de raccordement (36), formant ainsi ledit tuyau d'admission (31), ledit tuyau d'admission (31) étant adapté pour transporter ledit mélange air-carburant vers ledit moteur à combustion interne (25),
ledit joint de raccordement (36) étant configuré pour connecter ledit tuyau de capteur MAP (30) audit tuyau d'admission (31) dudit collecteur d'admission (32) pour transporter la pression dudit tuyau d'admission (31) vers ledit élément de détection (27),
ledit élément de détection (27) étant disposé au-dessus dudit collecteur d'admission (32), et la longueur dudit tuyau de capteur MAP (30) étant dans une plage prédéterminée de 200-250 mm.

2. Véhicule à deux roues (1) selon la revendication 1, dans lequel l'ensemble de cadre principal (102), qui permet le montage de l'élément de détection (27), comprend un cadre principal gauche (102L) et un cadre principal droit (102R) placés dans la direction de la largeur du véhicule à deux roues (1) et s'étendant vers l'arrière bas à partir du tube de direction (101).

3. Véhicule à deux roues (1) selon la revendication 2, dans lequel le cadre principal gauche (102L) et le cadre principal droit (102R) comprennent une paire de tubes, premier tube principal gauche (102LF), deuxième tube principal gauche (102LS) et premier tube principal droit (102RF), deuxième tube principal droit (102RS), cette paire de tubes principaux étant placée l'une au-dessus de l'autre le long d'un axe longitudinal.

4. Véhicule à deux roues (1) selon la revendication 1, dans lequel ledit moteur à combustion interne (25) reçoit ledit mélange air-carburant par ledit tuyau d'admission (31) via un bidon (35), le carburant pour ledit mélange air-carburant étant fourni par un réservoir de carburant (10), ledit réservoir de carburant (10) étant disposé au-dessus dudit ensemble de cadre principal (102), et ledit moteur à combustion interne (25) comportant ledit collecteur d'admission (32) disposé en dessous dudit réservoir de carburant (10).

5. Véhicule à deux roues (1) selon la revendication 1, dans lequel ledit élément de détection (27) fourni est un capteur MAP (27), ledit capteur MAP (27) étant disposé sur un boîtier MAP (28) pour éliminer du bruit et des vibrations, et ledit boîtier MAP (28) accueillant un embout de détection qui permet audit capteur MAP de déterminer la différence de pression dans ledit tuyau d'admission (31).

6. Véhicule à deux roues (1) selon la revendication 1, dans lequel ledit capteur MAP (27) est relié audit collecteur d'admission (32) par ledit tuyau de capteur MAP (30), ledit tuyau de capteur MAP (30) s'étendant à partir dudit boîtier de capteur MAP (28).

7. Véhicule à deux roues (1) selon la revendication 1, dans lequel ledit capteur MAP (27) est monté sur ledit ensemble de cadre principal (102) en montant ledit boîtier MAP (28) sur un support de montage (29), ledit support de montage (29) étant fixé de manière amovible audit ensemble de cadre principal (102).

8. Véhicule à deux roues (1) selon la revendication 1, dans lequel ledit capteur MAP (27) est monté sur ledit ensemble de cadre principal (102) au-dessus dudit premier tube principal du côté droit (102RF) et au-dessus dudit collecteur d'admission (32), ledit capteur MAP (27) étant disposé à côté dudit tube de direction (101) en avant dudit moteur à combustion interne (25).

9. Véhicule à deux roues (1) selon la revendication 1, dans lequel ledit capteur MAP (27) est monté sur ledit ensemble de cadre principal (102) et au-dessus dudit deuxième tube principal droit (102RS), ledit capteur MAP (27) étant disposé à côté dudit collecteur d'admission (32) et en avant dudit moteur à combustion interne (25).
